# EUROPEAN PATENT APPLICATION

(11) **EP 4 715 709 A1**
(43) Date of publication of application: **25.03.2026**
(21) Application number: 24211774.5
(22) Date of filing: 08.11.2024
(51) Int. Cl.: G06Q 10/20, G06Q 10/0631, G06Q 10/06

(54) **METHOD AND SYSTEM FOR MANAGING VEHICLE REPAIRING**

(71) Applicant: Xpress Group SPV Limited, Abu Dhabi (AE)
(72) Inventor: KHAR BOUTLY, Anas, Abu Dhabi (AE); TULUCA, Mihai, Abu Dhabi (AE)
(74) Representative: TRBL Intellectual Property

(57) **Abstract**

The present invention relates to a method for repairing a vehicle (100) by means of a repairing management system (1), comprising a booking module (2), an estimation module (3), a technician assignment module (4) and a repair assistant module (5). The booking module (2) receives a first request with vehicle data. The estimation module (3) receives and analyses the vehicle data, obtaining a repairing list (7) containing actions to be done. The technician assignment module receives repairing list (7). The technician assignment module creates a workflow (9) which contains all the actions of the repairing list in order, and assigns each action to be done to a technician. When a technician starts an assigned action, the repair assistance module (5) provides the technician with instructions for performing the repairing. From the confirmation of the booking date to the finishing of all the assigned actions, the technician assignment module verifies that the assigned action is finished in due date, and if there is a delay in any action of the workflow, the technician assignment module redates the actions of the workflow which are subsequent to the delayed action.

## Description

### FIELD OF THE INVENTION

This invention is related to the field of systems for managing vehicle repairing.

### BACKGROUND OF THE INVENTION

Vehicle repairing is a complex process where a big amount of different actors need to work together to provide the best possible way of coordination that lead in a repaired vehicle in the minimum possible time.

### BRIEF DESCRIPTION OF THE INVENTION

The present invention overcomes the above limitations of the prior art, by providing a device according to the invention.

In a first inventive aspect, the invention provides a method for repairing a vehicle by means of a repairing management system, the repairing management system comprising a booking module, an estimation module, a technician assignment module and a repair assistant module, the method comprising the steps of
a. the booking module receives a first request from a user, the first request containing vehicle data, and the booking module sends the vehicle data to the estimation module;
b. the estimation module receives and analyses the vehicle data, and identifies a plurality of affected parts and a plurality of actions, each action being referred to a need of repair;
c. the estimation module produces a repairing list which contains the plurality of actions and also produces a parts list which contains the plurality of affected parts;
d. the technician assignment module receives the repairing list;
e. the technician assignment module creates a workflow which contains all the actions of the repairing list in a predetermined order, wherein the predetermined order takes into account possible dependencies between actions;
f. the technician assignment module assigns each action to be done to a technician, wherein the assignment of each action to a technician includes the selection of an available time slot of the technician and the assignment of this available time slot to the corresponding action, wherein each available time slot contains a starting date and time and a finishing date and time, wherein the time slot of an action is posterior to the time slot of the preceding action;
g. the technician assignment module provides a repairing date and sends the booking module a confirmation with a booking date, which is the starting date of the first action of the workflow;
h. when a technician starts an assigned action, the repair assistance module provides the technician with instructions for performing the corresponding action, wherein the instructions are specific for the action and specific for the vehicle; and
i. from the confirmation of the booking date to the finishing of all the assigned actions, the technician assignment module verifies that the assigned action is finished in due date, and if the technician assignment module receives a delay in any action of the workflow, the technician assignment module redates the actions of the workflow which are subsequent to the delayed action.

Step a. involves the reception of a first request. This request is, in most cases, done by a vehicle owner, but in other cases, it may be done by an administrative person or by any agent which is intended to be the main requester of the repairing actions. This first request contains vehicle data, which will be used later on to determine the repairing actions to be done. This vehicle data is, in most cases, images or pictures of the vehicle to be repaired, where the affected parts are seen. However, in other cases, it may be written information, an expert's report, or any other pieces of information which can be used to determine the repairing actions.

This vehicle data is sent to the estimation module. Steps b. and c. refer to the actions performed by the estimation module, which receives the vehicle data and analyses it. By means of an artificial intelligence, a list of repairing actions and a list of affected parts may be extracted from the data. When an affected part needs to be replaced, it is incorporated into the parts list. Not all the parts which are affected need to be replaced, so it is possible that, in some cases, the artificial intelligence processes the image to discern whether a part needs to be replaced or not.

Step d. involves the technician assignment module receiving the repairing list. This is essential, since the technician assignment module needs the list of actions to assign each action to a technician.

Steps e. and f. describe this assignment. Firstly, there is a workflow which contains the actions to be done in an orderly manner. This order includes the eventual relation that may exist between actions (in some cases, it is necessary to finish one action before starting another one; for example, it is necessary to replace and mount one part before painting it). Once that this workflow has been established, the first action is assigned to a technician. To choose this technician, the technician assignment module takes into account the abilities needed to perform this action, so the technician for this action will be choose among all the technicians which has this ability (or abilities). From the technicians with this ability, the technician assignment module will choose the one that has the soonest availability, in terms of date and time. For example, if there are two technicians available for an action, and the first of them has a slot today at 15.00h and the second one has a slot tomorrow at 12.00, the first technician will be chosen, since it has a sooner availability. If the estimation time for this action is 2 hours, it is assigned that the first technician will start at 15.00h and will end at 17.00h today. Then, the next action in the workflow will look for slots which start, at least, at 17.00 today, but not earlier: the starting time of one action is posterior to the finishing time of the preceding action.

In step g., once that all the actions have been assigned and that every action has a starting date and time and a finishing date and time, a final repairing date may be calculated (as the finishing date of the last action). Hence, once that all the calculations and assignments are done, the confirmation may be sent to the booking module.

In step h., once that the repairing actions have started, each technician is provided with the help of the repair assistance module. This module provides instructions to the technical for performing the specific action. These instructions are related to the specific action and the specific part that needs to be repaired or replaced.

In step i., from the confirmation of the booking date to the finishing of all the repairing actions, the technician assignment module verifies that the assigned repairing action is finished in due date. This is important, since a delay that is quickly identified allows a rapid reaction to prevent that many other actions are affected. Some actions can be reassigned and/or redated if necessary.

In some particular embodiments, the vehicle data comprises at least one vehicle image, and:
step b. of the method comprises the substep of the estimation module analysing each one of the at least one vehicle image, identifying a list of needs of repair and a list of affected parts and, when all the vehicle images have been analysed, then eliminates duplicates of needs of repair and affected parts; and
step c. of the method further includes sending an order to at least one external server requesting the affected parts.

The estimation module is configured to provide a list of actions and a list of parts. In these particular embodiments, the list of actions and the list of parts is achieved by analysing the vehicle images provided by the user. For example, by analysing one image, the changes in colour, the extension of the affected area and the shape of the contours of each part can provide useful information to create the list of repairing processes.

Once that the list of parts is created, the estimation module may check if these parts are available in the inventory or should be requested to an external provider.

In some particular embodiments, the step of analysing the vehicle images comprises analysing changes in colour, the extension of surfaces affected by the damage and the shape of the contours of parts included in each vehicle image and compares with a database of images. These operations provide useful information to create the list of repairing processes.

In some particular embodiments, the technician assignment module comprises a database with competences of each technician, time availability of each technician and order list of technicians, and step f. comprises the following substeps:
the technician assignment module defines the abilities needed for one of the actions;
the technician assignment module checks the first available time slot for all the technicians which have the abilities required for this action;
the technician assignment module selects the technician with the earliest available time slot;
in the event there are more than one technician with the same earliest available time slot, the technician assignment module selects the technician which is first in the order list; and
the technician assignment module repeats these steps with the rest of the actions of the workflow, taking into account that the previous action needs to be finished before assigning the starting date of the subsequent action.

These features ensure the optimal assignment of the technician to the work to be completed.

In some particular embodiments, the database of the technician assignment module includes an efficiency parameter for each action and each technician and the substep of selecting the technician with the earliest available time slot also takes into account the efficiency parameter.

The efficiency parameter allows a wiser time management, since it takes into account, in a constant learning process, the abilities of each technician for specific tasks.

In some particular embodiments, the repair assistance module comprises a plurality of OEM manuals and CAD files, and wherein step h. comprises the following substeps:
the repair assistance module searches the action in the corresponding OEM manual and extracts a list of substeps to perform the action;
the repair assistance module extracts information from the CAD file to create a video where the substeps to perform the action are illustrated; and
the repair assistance module also creates a written list of instructions from the OEM manual, to be supplied together with the video, or as alternative to it.

In some particular embodiments, if the technician requests further information, the repair assistance module provides access to a chatbot device connected to an artificial intelligence and/or provides a communication with a human specialist.

In some particular embodiments, the system further comprises an administrative module and the method further comprises the step that the administrative module requests approval information from the user and sends the confirmation to the technician assignment module.

The cost estimation is sent back to the user, who may approve it or reject it. The administrative module compiles information about costs and date and sends a proposal to the user.

All the terms and embodiments described anywhere in this document are equally applicable to all aspects of the invention. It should be noted that, as used in the specification and in the appended claims, the singular forms "a", "an", and "the" include their plural referents unless the context clearly indicates otherwise. Similarly, the term "comprises" or "comprising" as used herein also describes "consists of" or "consisting of" in accordance with generally accepted patent practice.

### DESCRIPTION OF THE DRAWINGS

The foregoing and other features and advantages will be more fully understood from the detailed description of the invention, as well as from examples referring to the attached figures, which are described in the following paragraphs, wherein:
Figure 1 shows some steps of a method according to the invention, where the user interacts with the repairing management system.
Figure 2 shows further steps of a method according to the invention, where the list of actions to be assigned is created.
Figure 3 shows further steps of a method according to the invention, where the technician assignment module of the repairing management system assigns actions to a technician.
Figure 4 shows more steps of a method according to the invention, where the repair assistance module provides some assistance to the technician to perform the repairing actions.

### Numerical references used in the drawings

In order to provide a better understanding of the technical features of the invention, the referred Figures are accompanied by the following numerical references:

| | |
|---|---|
| 1 | Repairing management system |
| 2 | Booking module |
| 3 | Estimation module |
| 4 | Technician assignment module |
| 5 | Repair assistant module |
| 6 | Administrative module |
| 7 | Actions |
| 8 | Affected parts |
| 9 | Workflow |
| 10 | User |
| 11 | List of technicians |
| 12 | Technician |
| 100 | Vehicle |

### DETAILED DESCRIPTION OF THE INVENTION

The detailed description of the present invention to be described below refers to the accompanying drawings, which illustrate specific embodiments in which the present invention may be implemented. These embodiments will be described in detail sufficient to enable those skilled in the art to implement the present invention. It should be understood that various embodiments of the present invention are different from each other but need not be mutually exclusive. Accordingly, the detailed description to be described below is not intended to be taken in a limiting meaning, and the scope of the present invention, if properly described, is limited only by the appended claims, in addition to all scopes equivalent to those claimed by the appended claims. In the drawings, reference numerals refer to the same or similar functions over several aspects.

Hereinafter, preferred embodiments of the present invention will be described in more detail with reference to the accompanying drawings.

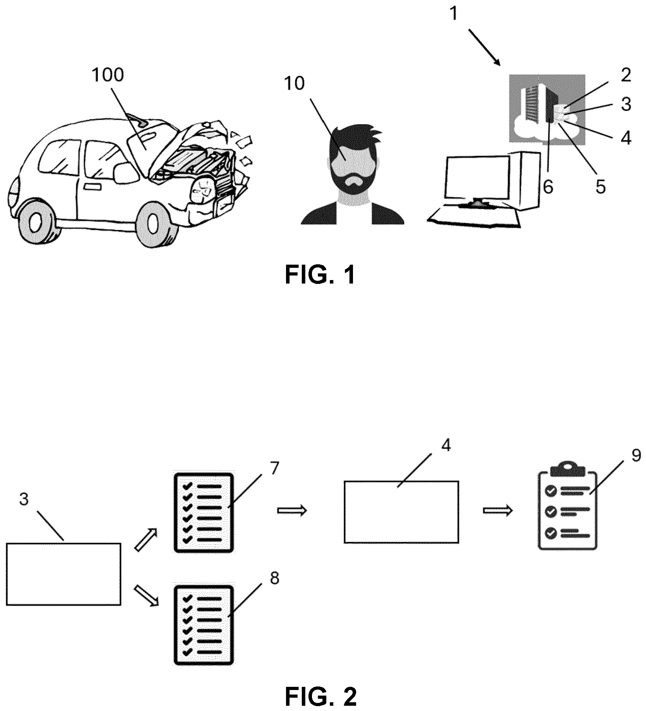

Figure 1 shows some steps of a method according to the invention, where the user interacts with the repairing management system.

In this method, there are different entities which cooperate to solve the technical problem. Firstly, there is a user 10 with a vehicle 100 that needs to be repaired. The user 10 comes to a repairing management system 1, which comprises a booking module 2, an estimation module 3, a technician assignment module 4, a repair assistant module 5 and an administrative module 6.

The user 10 is able to interact with the booking module 2, by means of a computer or a mobile device, to send a first request to the booking module 2. This request contains information about the user (contact data, invoicing data, etc) and information about the vehicle to be repaired. In this case, information comprises a plurality of photographs of the vehicle, which are sent together with the first request.

The booking module 2 sends the information about the vehicle to the estimation module 3. By means of an artificial intelligence, the photographs are analysed. From each photograph, the parts of the vehicle are identified and, if there is a damage in one or more of these parts, the damage is identified and evaluated. For example, by analysing one image, the changes in colour, the extension of the affected area and the shape of the contours of each part can provide useful information to create the list of repairing processes.

Figure 2 shows further steps of a method according to the invention, where the list of actions to be assigned is created.

Once that all the photographs have been analysed and duplicates have been eliminated, a list of repairing processes are extracted from the information provided by the photographs. These repairing processes contain a list of actions 7 to be done (replacing, repairing, etc) and a list of affected parts. When an affected part needs to be replaced, it is incorporated into a parts list 8. Once that the list of parts 8 is created, the estimation module 3 may check if these parts are available in the inventory or should be requested to an external provider.

Then, the estimation module 3 sends the list of actions 7 to the technician assignment module 4, so that each one of the actions contained in the list of actions 7 may be assigned to a technician.

The technician assignment module 4 receives repairing list and creates a workflow 9 which contains all the actions of the repairing list in order. Each action requires one or more abilities to be performed.

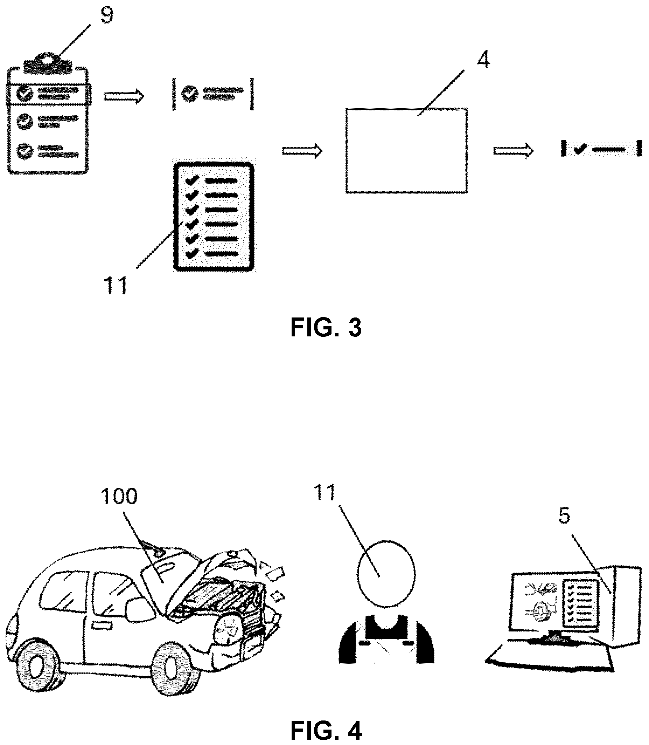

Figure 3 shows further steps of a method according to the invention, where the technician assignment module of the repairing management system assigns actions to a technician.

Once the workflow 9 has been created by the technician assignment module 4, the first action of this workflow 9 is assigned to a technician. A list of technicians 11 which has the required abilities is presented and, from this list, the technician which has the soonest available date is chosen. In the event there are more than one technician with the same earliest available date, the technician assignment module 4 selects the technician which is first in the order list.

In some cases, the criterion is not the soonest available date but the soonest finishing time. To calculate the soonest finishing time, an efficiency parameter may be used, because it is possible that, for the same action, one technician may take 2 hours and another more efficient technician may take 1 h30m.

Once that the first action has been assigned, each this first assigned action will have a starting date and time and a finishing date and time.

The second action is then assigned and, in this case, the finishing time of the preceding action (the first one, in this case) will be taken into account to look for the soonest availability. If the finishing time of the first action is today at 17.00h and we have two technicians for the second action; one that has a slot today from 16.00 to 17.00 and another one who has a slot today from 17.30 to 18.30, the second one will be chosen, since the slot of the first one is useless, since the second action cannot be started unless the first action has finished before.

This assignment is repeated for all the actions. In some cases, more than one workflow may be established, if there are independent actions that do not need the rest of the actions to be performed. But within a workflow, each subsequent action needs the preceding action to be finished before starting the next one.

Once that all the actions have been assigned and that every action has a starting date and time and a finishing date and time, a final repairing date may be calculated as the finishing date of the last action. Hence, once that all the calculations and assignments are done, the confirmation may be sent to the booking module, so that the booking module confirms the terms with the user that made the first request.

The administrative module sends a cost estimation to the user and requests his approval. Once that the approval has been confirmed, the administrative module sends the confirmation to the technician assignment module.

Figure 4 shows more steps of a method according to the invention, where the repair assistance module provides some assistance to the technician to perform the repairing actions.

Once that the starting date and time of the first assigned action arrives, the corresponding technician starts with the repairing action.

While the action is taking place, the technician 11 has the possibility of requiring the help of the repair assistance module 5. This module receives information from the vehicle manufacturers in the shape of CAD files and from the parts manufacturers, in the shape of OEM manuals. The repair assistance module takes information from these two sources to provide specific pieces of information to the technician. First option is creating a video where the parts are represented using information from the CAD files, and the instructions to repair the parts are provided by using information from the OEM manuals. The OEM manuals contain information about how to repair parts, which are the steps that should be taken, but do not contain information about the specific part. The CAD files, provided by the car manufacturers, provide information (images, shape, size) about the real parts, but do not provide information about how to fix them. The video from the repair assistance module thus provides a synergic pack of information for technicians. Second option is creating a list of instructions, which may be illustrated with pictures extracted from the CAD files. As an alternative to these two options is providing connection to a chatbot device connected to an artificial intelligence or a communication with a human specialist.

During the performance of all the assigned actions, the technician assignment module verifies that the assigned repairing actions are finished in due date. If a delay is found, the rest of the actions of the corresponding workflow are redated, by following the same steps that led to the assignment. In fact, this technician can have actions which belong to the repairing of different vehicles, and the redating of the delayed action may affect to these actions of other vehicles, which in turn will affect to the rest of the actions of the corresponding workflows.

As an example, there is the case of two different vehicles that need to be repaired. First vehicle has a first workflow, where a first technician has a first assigned action on 2 January from 12.30 to 13.30. The second vehicle has a second workflow, where the same first technician has an assigned action on 2 January from 13.30 to 14.30.

If the first technician is late in finishing the first assigned action, it will cause two different consequences: firstly, the action in the second workflow will be delayed, since it will not start at 13.30. Further, the subsequent actions of the first workflow (which may belong to different technicians) will also be delayed, since they cannot start until the previous one is finished.

## Claims

1. Method for repairing a vehicle (100) by means of a repairing management system (1), the repairing management system (1) comprising a booking module (2), an estimation module (3), a technician assignment module (4) and a repair assistant module (5), the method comprising the steps of
a. the booking module (2) receives a first request from a user (10), the first request containing vehicle data, and the booking module sends the vehicle data to the estimation module (3);
b. the estimation module (3) receives and analyses the vehicle data, and identifies a plurality of affected parts and a plurality of actions, each action being referred to a need of repair;
c. the estimation module (3) produces a repairing list (7) which contains the plurality of actions and also produces a parts list (8) which contains the plurality of affected parts;
d. the technician assignment module (4) receives the repairing list (7);
e. the technician assignment module (4) creates a workflow (9) which contains all the actions of the repairing list in a predetermined order, wherein the predetermined order takes into account possible dependencies between actions;
f. the technician assignment module (4) assigns each action to be done to a technician, wherein the assignment of each action to a technician includes the selection of an available time slot of the technician and the assignment of this available time slot to the corresponding action, wherein each available time slot contains a starting date and time and a finishing date and time, wherein the time slot of an action is posterior to the time slot of the preceding action;
g. the technician assignment module (4) provides a repairing date and sends the booking module a confirmation with a booking date, which is the starting date of the first action of the workflow;
h. when a technician starts an assigned action, the repair assistance module (5) provides the technician with instructions for performing the corresponding action, wherein the instructions are specific for the action and specific for the vehicle;
i. from the confirmation of the booking date to the finishing of all the assigned actions, the technician assignment module verifies that the assigned action is finished in due date, and if the technician assignment module receives a delay in any action of the workflow, the technician assignment module redates the actions of the workflow which are subsequent to the delayed action.

2. Method according to claim 1, wherein the vehicle data comprises at least one vehicle image, and wherein:
step b. of the method comprises the substep of the estimation module analysing each one of the at least one vehicle image, identifying a list of needs of repair and a list of affected parts and, when all the vehicle images have been analysed, then eliminates duplicates of needs of repair and affected parts; and
step c. of the method further includes sending an order to at least one external server requesting the affected parts.

3. Method according to claim 2, wherein the step of analysing the vehicle images comprises analysing changes in colour, the extension of surfaces affected by the damage and the shape of the contours of parts included in each vehicle image and compares with a database of images.

4. Method according to any of the preceding claims, wherein the technician assignment module comprises a database with competences of each technician, time availability of each technician and order list of technicians, and step f. comprises the following substeps:
the technician assignment module defines the abilities needed for one of the actions;
the technician assignment module checks the first available time slot for all the technicians which have the abilities required for this action;
the technician assignment module selects the technician with the earliest available time slot;
in the event there are more than one technician with the same earliest available time slot, the technician assignment module selects the technician which is first in the order list; and
the technician assignment module repeats these steps with the rest of the actions of the workflow, taking into account that the previous action needs to be finished before assigning the starting date of the subsequent action.

5. Method according to claim 4, wherein the database of the technician assignment module includes an efficiency parameter for each action and each technician and the substep of selecting the technician with the earliest available time slot also takes into account the efficiency parameter.

6. Method according to any of the preceding claims, wherein the repair assistance module comprises a plurality of OEM manuals and CAD files, and wherein step h. comprises the following substeps:
the repair assistance module searches the action in the corresponding OEM manual and extracts a list of substeps to perform the action;
the repair assistance module extracts information from the CAD file to create a video where the substeps to perform the action are illustrated; and
the repair assistance module also creates a written list of instructions from the OEM manual, to be supplied together with the video, or as alternative to it.

7. Method according to claim 6, wherein, if the technician requests further information, the repair assistance module provides access to a chatbot device connected to an artificial intelligence and/or provides a communication with a human specialist.

8. Method according to any of the preceding claims, wherein the system further comprises an administrative module and the method further comprises the step that the administrative module requests approval information from the user and sends the confirmation to the technician assignment module.
